# EUROPÄISCHE PATENTSCHRIFT

(11) **EP 0 571 720 B1**
(45) Veröffentlichungstag und Bekanntmachung des Hinweises auf die Patenterteilung: **12.06.1996**
(21) Anmeldenummer: 93103436.7
(22) Anmeldetag: 04.03.1993
(51) Int. Cl.: B01J 49/00, C02F 1/42

(54) **Wasseraufbereitungsanlage**
Water treatment plant
Installation de traitement d'eau

(30) Priorität: 28.05.1992 DE 4217652
(43) Veröffentlichungstag der Anmeldung: 01.12.1993
(73) Patentinhaber: Judo Wasseraufbereitung GmbH, D-71364 Winnenden (DE)
(72) Erfinder: Schuler, Hansjörg, W-7150 Backnang 7 (DE); Söcknick, Ralf, Dr., W-7014 Kornwestheim (DE)
(74) Vertreter: KOHLER SCHMID + PARTNER

(56) Entgegenhaltungen:
- EP-A- 0 031 535
- EP-A- 0 219 704
- FR-A- 2 107 204
- FR-A- 2 408 337
- US-A- 3 414 130
- US-A- 3 476 247
- US-A- 4 421 652

## Beschreibung

Die Erfindung betrifft eine Vorrichtung zur Wasseraufbereitung, insbesondere eine Ionenaustauschvorrichtung für die Hauswasserbehandlung, mit Mitteln zur Aufbereitung von Wasser, insbesondere einem Ionenaustauschermaterial, mit einem Vorratsgefäß für die Bereitstellung einer Regeneriermittellösung zum Regenerieren der Mittel zur Wasseraufbereitung, insbesondere einem Salzsole-Vorratsgefäß, sowie mit einer kolbenhubgesteuerten Dosiervorrichtung für die Zumessung von Nachspeisewasser in das Vorratsgefäß, wobei die Dosiervorrichtung einen hohlzylindrischen Förderkörper aufweist, der einen axial verschiebbaren Kolben enthält, dessen eine axiale Kolbenfläche einem Druckbereich innerhalb des Zylinders zugewandt ist, welcher mit Wasserdruck, vorzugsweise des aufzubereitenden oder des bereits aufbereiteten Wassers, beaufschlagbar ist, während der Kolben auf der dem Druckbereich axial gegenüberliegenden Seite mit Hilfe eines Federelementes, insbesondere einer Schraubenfeder, die sich gegen eine stirnseitige Innenwand des Zylinders abstützt, in die Richtung des Druckbereiches gedrückt wird, und wobei das bei einem Kolbenhub verdrängte Wasservolumen dem Vorratsgefäß zugeführt werden kann.

Eine solche Vorrichtung ist aus der DE 26 55 374 A1 bekannt.

Anlagen oder Geräte zur Wasserbehandlung, die eine Vielzahl von Ventilsteuerungsvorgängen erfordern, werden je nach ihrer Dimension unterschiedlich angetrieben. Große Anlagen, die z.B. im industriellen Bereich eingesetzt werden, sind in der Regel mit einer Vielzahl von Magnetventilen ausgestattet und haben eine Elektronik, die das Ventilansteuerungsprogramm vorgibt. Derartige Magnetventile sind für kleinere, in der Hauswassertechnik eingesetzte Wasserbehandlungsgeräte - hierbei handelt es sich überwiegend um Ionentauscher, es sind jedoch auch Entsäuerungs-, Enteisenungs- oder Entmanganungsfilter etc. denkbar - häufig jedoch zu teuer. Daher wird in der Regel auf eine mit einem Elektromotor angetriebene Steuernockenwelle (siehe Prospekt "Maßgebend in der Wasseraufbereitung" der Fa. JUDO Wasseraufbereitung GmbH, Seite 22) oder eine Steuernockenscheibe, wie sie aus der EP 0 447 350 A2 bekannt ist, bzw. ein aus der EP 0 184 773 A2 bekanntes Keramikscheibenpaar, das die Steuerventile enthält, zurückgegriffen.

Die hierfür verwendeten Elektromotoren sind jedoch, da sie sehr robust sein müssen, relativ teuer. Eine weitere Schwierigkeit besteht darin, die Steuernockenwelle oder ein sonstiges Steuerelement über die Motordrehung immer richtig zu positionieren, damit die richtigen Ventile zum richtigen Zeitpunkt geöffnet bzw. geschlossen werden. Dies läßt sich z.B. über einen elektronisch gesteuerten Schrittmotor oder aber über Positionsschalter realisieren. Beide Möglichkeiten sind jedoch aufwendig. Alternativ zum Elektroantrieb der Steuerelemente ist ein wesentlich preiswerterer Antrieb mit Wasserkraft möglich. So ist beispielsweise aus der US-A 3,891,552 ein Wasserzähler mit Flügelrad als Antrieb für die Ventilsteuerung bekannt, bei dem die mechanische Ansteuerung des oder der Ventile über die Wasserkraft mit Hilfe von Druckwasser erfolgt. Nachteilig ist die bei dieser Ventilansteuerung erforderliche aufwendige Getriebeübersetzung für den Wasserzähler. Ein weiterer Nachteil ist der durch den antriebsbedingten Energieverlust hervorgerufene hohe Anlaufwert des Wasserzählers, der bei da. 150l/h liegt, während ein herkömmlicher Wasserzähler ohne Antriebsfunktion bei etwa 30l/h anläuft.

Ein weiteres Problem bei den bekannten Anlagen zur Wasserbehandlung ist die exakte Zumessung der Regeneriermittelmenge. Nach der EP 0 347 577 B1 erfolgt die Zumessung des Regeneriermittels beispielsweise über einen Schwimmerschalter. In einem demgegenüber weiter verbesserten Verfahren nach dem oben zitierten Prospekt der Fa. JUDO (Seiten 22 und 23) wird Frischwasser über den Salzvorrat geleitet, das Frischwasser sättigt sich mit dem Regeniersalz und strömt über ein Überlaufwehr in den Solebereitstellungsbehälter. Dort wird es für die Regeneration vorgelegt. Es strömt solange Regenierlösung über dieses Wehr nach, bis der Schwimmerkörper den oberen Schaltpunkt des Schwimmerschalters erreicht hat und dieser dann das Frischwassernachspeiseventil schließt. So wird ein bestimmtes Regeniermittelvolumen abgemessen. Dieses Verfahren hat jedoch zwei Schwachpunkte: Zum einen können Regeniersalzverkrustungen die Beweglichkeit des Schwimmerkörpers beeinträchtigen und zum anderen gibt es Schwankungen der über das Wehr nachlaufenden Regeneriermittelmenge in Abhängigkeit von der Oberflächenspannung zwischem dem Wehrmaterial und der Regenerierflüssigkeit.

Die beiden oben genannten Probleme haben zu einer Reihe von alternativen Verfahren geführt. So beschreibt die DE 26 44 759 A1 einen einfachen Wasserenthärter, bei dem ein Kolben vom Wasserdruck bewegt wird und in bestimmten Kolbenpositionen Ventile geöffnet bzw. geschlossen werden. Gleichzeitig stellt das durch die Kolbenverdrängung im Führungszylinder erzeugte Volumen das Nachspeisewasservolumen und dadurch letztendlich das Regeneriermittelvolumen dar. Dabei wird das gesamte zugemessene Volumen mit einem einzigen Hub gefördert, was ein großes Zylindervolumen voraussetzt.

Eine ähnliche Vorrichtung, bei der nicht das Nachspeisewasser, sondern direkt das Regeniermittel durch den Kolbenhub abgemessen wird, beschreibt die DE 26 52 113 C2. Eine volumenmäßig definierte Frischwassernachspeisung ist in beiden Fällen nicht vorgesehen.

Demgegenüber ist in der eingangs zitierten DE 26 55 374 A1 eine über ein Magnetventil gesteuerte Nachspeisewasserdosierung beschrieben, bei der die Volumensteuerung des Nachspeisewassers für die Sole mittels Kolbenhub erfolgt. Bei der bekannten Vorrichtung sind jedoch keinerlei Ventilsteuerfunktionen vorgesehen, sondern es wird lediglich die Zumessung von Frischwasser in den Sole-Vorratsbehälter bewirkt.

Allen oben genannten alternativen Vorrichtungen und Verfahren ist gemein, daß komplizierte Regenerationsverfahren mit Sparbesalzung, also Soleverdünnung und Nachwaschfunktion sowie Zwangsregeneration alle 4 Tage, wie von der DIN 19636 gefordert, nicht realisiert werden können. Auch muß das durch die Kolbenverdrängung entstandene Zylindervolumen so groß sein, daß es dem gesamten Regeneriermittelvolumen entspricht. Ein einstellbares Regeneriermittelvolumen ist bei keinem der bekannten Lösungsvorschläge verwirklicht und wäre bestenfalls durch eine Weiterentwicklung der aus DE 26 55 374 A1 bekannten Vorrichtung denkbar, die jedoch hinsichtlich des Problems der Ventilansteuerung keine Lösungsansätze bietet.

Aufgabe der vorliegenden Erfindung ist es daher, eine möglichst einfache und kompakte Vorrichtung zur Wasseraufbereitung der eingangs genannten Art bereitzustellen, bei der einerseits eine genaue Zumessung des Nachspeisewassers für das Regeneriermittelreservoir erfolgen kann, andererseits aber auch die Ventilsteuerfunktionen programmgesteuert, aber ohne aufwendige elektrische oder mechanische Mittel bewältigt werden können.

Diese Aufgabe wird erfindungsgemäß dadurch gelöst, daß der Kolben an einem seiner beiden axialen Enden, vorzugsweise an dem dem Druckbereich abgewandten Ende, eine axial sich erstreckende Schubstange trägt, die tangential an ein Zahnrad angreift und dieses um einen definierten Winkel α in einem festgelegten, gleichbleibenden Drehsinn weiterdrehen kann, wobei das Zahnrad ein mechanisches Ventilsteuerungselement mit zyklischem Steuerprogrammablauf, wie z.B. eine Nockenwelle, eine Nockenscheibe oder dergleichen, antreibt.

Mit der erfindungsgemäßen Vorrichtung wird auf sehr elegante Weise und mit technisch äußerst einfach und sehr billig zu realisierenden Mitteln die Wasserkraft, die den Kolben der Dosiervorrichtung für die Zumessung von Nachspeisewasser in das Vorratsgefäß antreibt, gleichzeitig für den Antrieb einer Programmsteuerung für die diversen Ventile der Wasseraufbereitungsanlage eingesetzt. Eine bereits vorhandene Dosiervorrichtung kann durch Vorsehen einer Schubstange am Hubkolben und einem entsprechend modifizierten stangenseitigen Deckel des Zylindergehäuses ohne weiteres nachgerüstet werden. Damit steht dann neben einer genauen volumenmäßigen Zumessung des Nachspeisewassers für das Vorratsgefäß zur Bereitstellung einer Regeneriermittellösung gleichzeitig ein beliebig fein taktbarer Schrittmotor zur Ansteuerung von Öffnungs- und/oder Schließvorgängen der in der Anlage vorhandenen Ventile zur Verfügung. Es wird also mit sehr einfachen Mitteln und in kompakter Form das Problem einer genauen Dosierung von Flüssigkeitsvolumina gleichzeitig mit dem Problem einer genauen Programmsteuerung gelöst. Eine Spannungsquelle für einen relativ teuren und in der Regel empfindlichen Elektromotor für den Antrieb der Ventilsteuerung ist bei der erfindungsgemäßen Lösung nicht mehr erforderlich.

Die erfindungsgemäße Vorrichtung wird vorteilhafterweise derart betrieben, daß in den Druckbereich innerhalb des Zylinders über einen Treibwasseranschluß unter Druck stehendes Wasser eingeleitet wird, welches den Kolben gegen die Federkraft in Richtung auf die federseitige Zylinderkammer drückt. Hat der Kolben seinen maximalen Hub erreicht, so wird der Treibwasseranschluß geschlossen und das im Zylinder befindliche Wasser wird durch den Kolben der von der Feder nunmehr in die entgegengesetzte Richtung in seine Ruheposition zurückgeschoben wird, aus dem Zylinder durch eine entsprechende Auslaßleitung zum Vorratsgefäß herausgedrückt. Die Ablaufgeschwindigkeit des Ventilsteuerprogrammes ist dabei von der Taktfrequenz der Antriebswasserzuführung und -ableitung sowie von der Anzahl der Zähne des anzutreibenden Zahnrades, die einem kompletten Programmablauf für ein Ventilsteuerprogramm zugeordnet sind, abhängig.

Das nach dem Schubvorgang aus dem Zylinder herausgedrückte Antriebswasser, dessen Volumen durch die Zylinderquerschnittsfläche und den Kolbenhub je Schubvorgang bestimmt wird, definiert über die Zahnzahl des angetriebenen Zahnrades bei einer Umdrehung desselben, d.h. bei einem Durchlauf des gesamten Steuerungsprogrammes bzw. einem ganzzahligen Vielfachen hiervon, jeweils ein exaktes Wasservolumen, welches wesentlich größer ist als das Zylindervolumen des Antriebszylinders. Dieses Wasservolumen wird zur dosierten Frischwassernachspeisung in den Regeneriermittelvorratsbehälter der Wasseraufbereitungsanlage verwendet und führt auf diese Weise zu einer sehr exakten und definierten Abmessung der bereitgestellten Regeneriermittellösung.

Bei einer besonders bevorzugten Ausführungsform der erfindungsgemäßen Wasseraufbereitungsvorrichtung ist das Volumen des Vorratsgefäßes, insbesondere das Volumen des Regeneriermittelvorrates, größer als das Volumen des Zylinders, vorzugsweise ein ganzzahliges Vielfaches des Zylindervolumens. Dadurch kann der Steuerkopf der Anlage besonders kompakt und damit preisgünstig hergestellt werden.

Bei einer bevorzugten Ausführungsform ist der maximale Kolbenhubweg des Kolbens einstellbar. Insbesondere bei besonders einfachen Ausführungsformen kann der Kolbenhubweg ohne besondere Zusatzeinrichtungen im Bereich zwischen einem und zwei Zahnabständen des Zahnrades eingestellt werden, so daß das Regeneriermittelvolumen nahezu um den Faktor 2 variierbar ist.

Eine wesentlich größere, bei entsprechender baulicher Ausführung der Dosiervorrichtung in der Tat nahezu unbegrenzte Variationsbreite für die Einstellung des maximalen Kolbenhubweges ergibt sich bei einer Ausführungsform, bei der die Schubstange zumindest auf einem Teil ihrer axialen Länge ein Außengewinde aufweist, wobei auf dem Außengewinde eine Stellmutter vorgesehen ist, die beim Einfahren der Schubstange in den Zylinder gegen einen mit dem Zylinder starr verbundenen Anschlag anschlägt. Damit kann die Länge der pro Kolbenhub geförderten Flüssigkeit beliebig stufenlos eingestellt werden.

Dies wird auch bei einer anderen Ausführungsform ermöglicht, bei der der Druckbereich des Zylinders mit einer Rückwand gegen die äußere Atmosphäre abgeschlossen ist, wobei in der Rückwand, vorzugsweise in axialer Verlängerung der Schubstange ein durchgängiges Schraubgewinde vorgesehen ist, in das eine Stellschraube eingreift, gegen die im eingeschraubten Zustand der Kolben beim Einfahren der Schubstange in den Zylinder anschlägt. Vorteilhaft ist bei dieser Ausführungsform die etwas komfortablere Einstellmöglichkeit auf der besser zugänglichen, der Schubstange abgewandten Seite der Dosiervorrichtung.

Bei einer Weiterbildung dieser Ausführungsform sind zwischen dem Schraubgewinde und der Stellschraube Dichtmittel, insbesondere eine O-Ringdichtung vorgesehen, die den Druckbereich gegen die äußere Atmosphäre abdichten. Dadurch kann sichergestellt werden, daß kein Druckwasser durch die Gewindegänge der Stellschraube nach außen hin in die Umgebung entweicht.

Bei einer weiteren Ausführungsform ist eine den Kolben enthaltende federseitige Zylinderkammer durch eine insbesondere Gummi oder einen anderen elastomeren Werkstoff enthaltende Membrane, vorzugsweise eine Rollmembrane vom Druckbereich wasserdicht abgetrennt. Dadurch kommt weder die Rückstellfeder noch die Schubstange mit dem Antriebswasser in Berührung, so daß keine Korossionsprobleme auftreten können. Außerdem muß auf diese Weise die Schubstange nicht gegenüber der Atmosphäre abgedichtet werden.

Statt der beschriebenen Membrandichtung ist bei einer anderen Ausführungsform eine die Schubstange teilweise aufnehmende federseitige Zylinderkammer durch eine zwischen dem Kolben und der Zylinderinnenwand des Zylinders vorgesehene O-Ringdichtung vom Druckbereich wasserdicht abgetrennt. Eine derartige O-Ringdichtung ist in der Regel mechanisch einfacher herstellbar und daher preisgünstiger. Die durch die O-Ringdichtung bedingte erhöhte Reibung bei axialer Bewegung des Kolbens spielt demgegenüber keine Rolle, da der erhöhte Energieaufwand der potentiellen Energie des unter Druck stehenden Wassers im Druckbereich entnommen wird.

Bei einer Ausführungsform ist ein 3/2 Wege-Ventil vorgesehen, das vorzugsweise elektrisch oder magnetisch ansteuerbar ist, und in welches eine Zu- und Ablaufleitung für das in den Druckbereich des Zylinders gelangende Wassers, eine Druckwasserzulaufleitung sowie eine in das Vorratsgefäß mündende Abwasserauslaßleitung münden. Mit dem 3/2 Wege-Ventil wird zunächst der Zulauf des Antriebswassers zum Zylinder geöffnet und der Auslaß gleichzeitig geschlossen, wodurch der Kolben gegen die Feder bewegt wird und die Schubstange des Kolbens das Zahnrad weiterdreht. Eine die Taktfrequenz bestimmende Steuerung schließt den Antriebswasserzulauf und öffnet gleichzeitig den Auslaß, so daß die Feder den Kolben in seine Ruheposition zurückschieben und das Antriebswasser aus dem Zylinder verdrängen kann.

Bei einer anderen Ausführungsform ist ein billiges 2/2 Wege-Ventil vorgesehen, das ebenfalls vorzugsweise elektrisch oder magnetisch angesteuert wird, und in welches einerseits die Druckwasserzulaufleitung, andererseits die Zulaufleitung für das in den Druckbereich des Zylinders gelangende Wasser münden.

Bei dieser Ausführungsform ist außerdem in einer separaten Ablaufleitung für das aus dem Druckbereich in das Vorratsgefäß fließende Wasser ein normalerweise ständig geöffnetes Drosselorgan, vorzugsweise eine Drosseldüse angeordnet, welche bewirkt, daß neben dem definierten Kolbenhubvolumen permanet eine zusätzliche definierte Abwassermenge je Kolbenhub in das Vorratsgefäß abfließt.

Bei einer bevorzugten Ausgestaltung dieser Ausführungsform ist in der Druckwasserzulaufleitung oder in der Zulaufleitung für das in den Druckbereich gelangende Wasser ein Druckminderer vorgesehen, der den Wasserdruck des Antriebswassers definiert. Dadurch wird sichergestellt, daß unabhängig vom aktuellen Leitungswasserdruck über das Drosselorgan je Kolbenhub eine genau definierte Abwassermenge in das Vorratsgefäß abfließt.

Bei einer bevorzugten Ausführungsform der erfindungsgemäßen Vorrichtung ist die vom Druckbereich wasserdicht abgetrennte Zylinderkammer gegenüber der Umgebung des Förderkörpers abgedichtet. Weiterhin ist eine Verbindungsleitung vorgesehen, die einerseits in die Zylinderkammer, andererseits nach einer Verzweigungsstelle sowohl in eine mit dem Regeneriermittellösungsvorrat im Vorratsgefäß in Verbindung stehende Ansaugleitung als auch in eine Leitung mündet, welche ihrerseits in eine innerhalb des Vorratsgefäßes abgesonderte Bereitstellungskammer mündet, in der das aktuell benötigte Volumen an Regeneriermittellösung bereitgestellt wird. In der Ansaugleitung ist bei dieser Ausführungsform eine in Richtung des angesaugten Regeneriermittellösungsstromes sich öffnendes Rückschlagventil und in der zur Bereitstellungskammer führenden Leitung ein in Richtung des in die Bereitstellungskammer abfließenden Stromes sich öffnendes weiteres Rückschlagventil vorgesehen. Beim Rückstellvorgang des Kolbens kann dadurch aus dem Vorratsgefäß Regeneriermittellösung angesaugt und beim Schubvorgang des Kolbens dieses genau definierte Volumen an Regeneriermittelflüssigkeit in die Bereitstellungskammer gepumpt werden. Auf diese Weise kann sowohl das Nachspeisewasser als auch die aktuell bereitgestellte Regeneriermittelflüssigkeit von dem Förderkörper abwechselnd gefördert und jeweils exakt zudosiert werden.

Bei einer bevorzugten Ausführungsform der erfindungsgemäßen Wasseraufbereitungsvorrichtung umfaßt das mechanische Ventilsteuerungselement ein Keramikscheibenpaar mit integrierten Steuerventilen in Form von definierten scharfkantigen Durchbrüchen. Durch die Kombination von Steuerelement und Steuerventilen wird die gesamte Anlage noch kompakter und im mechanischen Betrieb noch störungssicherer, da zusätzliche Teile wie Nockenwelle oder Nockenscheibe wegfallen.

Die Erfindung umfaßt auch eine Vorrichtung zum Antrieb eines mechanischen Ventilsteuerungselementes mit zyklischem Steuerungsprogrammablauf für den Einsatz bei Wasserbehandlungsgeräten mit regenerierbaren Mitteln zur Wasseraufbereitung, bei der das Ventilsteuerungselement insbesondere eine Nockenwelle, eine Nockenscheibe oder ein Keramikscheibenpaar mit integrierten Steuerventilen in Form von definierten, scharfkantigen Durchbrüchen sein kann, wobei das Ventilsteuerungselement von einem Zahnrad angetrieben wird, an dessen Zähnen tangential eine mit einem druckwassergetriebenen Hubkolben verbundene Schubstange über eine Klinke angreift, so daß das Zahnrad bei jedem Kolbenhub um einen bestimmten, über den Kolbenhub und die Zahnzahl des Zahnrades definierten Winkel α in einem gleichbleibenden Drehsinn weitergedreht wird.

Bei einer vorteilhaften Ausführungsform ist eine weitere Klinke vorgesehen, die an einer anderen Stelle als die mit der Schubstange verbundene Klinke am Umfang des Zahnrades tangential in der Weise eingreift, daß ein Zurückdrehen des Zahnrades ausgeschlossen ist.

Vorteilhaft ist auch eine Ausführungsform der erfindungsgemäßen Vorrichtungen, bei der die Zähne des Zahnrades sägezahnförmig ausgebildet sind, so daß ein Zurückrutschen der eingreifenden Klinke in der der Drehrichtung des Zahnrades entgegengesetzten Richtung zuverlässig verhindert wird.

Bei einer besonders bevorzugten Ausführungsform der erfindungsgemäßen Vorrichtungen ist am Umfang des Zahnrades eine Klinkenführung vorgesehen, gegen die eine an dem dem Zylinder abgewandten Ende der Schubstange vorgesehenen Klinke leicht vorgespannt ist, so daß die Klinke beim Ausfahren der Schubstange aus dem Zylinder zunächst gegen die Klinkenführung drückt und nach dem Überfahren der Klinkenführung in den nächsten erreichbaren Zwischenraum zwischen zwei Zähnen des Zahnrades einrastet. Unabhängig vom Rückhubweg des Kolbens beim Einfahren der Schubstange in den Zylinder kann durch die Klinkenführung sichergestellt werden, daß immer nur der nächst folgende Zwischenraum zwischen zwei Zähnen des Zahnrades von der Klinke beim nächsten Schubvorgang erfaßt wird. Dadurch kann der Kolbenhubweg bei gleichbleibender Dosiergenauigkeit der Dosiervorrichtung nahezu beliebig vergrößert werden.

Die vorgenannten erfindungsgemäßen Vorrichtungen können vorteilhaft bei Enthärtungs-, Entsäurungs-, Enteisenungs- oder Entmanganungsanlagen eingesetzt werden.

In den Rahmen der Erfindung fällt auch ein Verfahren zum Betrieb einer Vorrichtung mit einstellbarem maximalen Kolbenhubweg der oben beschriebenen Art, bei der die zum Regenerieren der Mittel zur Wasseraufbereitung bereitzustellende Volumenmenge an Regeneriermittellösung in Abhängigkeit von der Gesamthärte des in einem Betriebszyklus zu behandelnden Wasservolumens festgelegt und die bei gleichbleibender Anzahl von Kolbenhüben pro Regenerationsvorgang von dem Druckwasser getriebenen Hubkolben geförderte Volumenmenge an Regeneriermittellösung durch entsprechende Einstellung des maximalen Kolbenhubweges mit der festgelegten Volumenmenge in Übereinstimmung gebracht wird. Dadurch kann unabhängig von der aktuellen Wasserhärte des zu behandelnden Wassers bei gleichbleibendem behandelten Wasservolumen pro Betriebszyklus die bereitgestellte Regeneriermittelmenge so eingestellt werden, daß einerseits das Ionenaustauschermaterial vollständig regeneriert wird, andererseits aber kein überschüssiges Regeneriermittel verschwendet wird.

Bei einer besonders vorteilhaften Variante dieses Verfahrens wird das Volumen des in einem Betriebszyklus vor Einleitung des nächsten Regeneriervorganges zu behandelnden Wassers als Vielfaches 2ⁿ · X eines minimalen Wasservolumens X vor Beginn des Betriebszyklus festgelegt, wobei n = 0, 1, 2, 3 ... sein kann, und wobei mit zunehmender Gesamthärte des zu behandelnden Wassers kleinere Vielfache 2ⁿ · X ausgewählt werden. Die Regeneration der Enthärtungsanlage wird also nach Durchlauf von fest vorgebbaren Wasservolumina ausgelöst, wobei sich diese Wasservolumina zueinander wie 1 X Liter zu 2 X Liter zu 4 X Liter etc. einer minimalen Menge X verhalten. Der zur Bereitstellung einer ausreichenden Menge von Regeneriermittel erforderliche Kolbenhubweg hält sich auch bei besonders hartem zu behandelnden Wasser in vertretbaren Grenzen, da bei einer größeren Härte des zu behandelnden Wassers das pro Betriebszyklus behandelte Wasservolumen entsprechend herabgesetzt werden kann. Die Einstellung des größten behandelbaren Wasservolumens, beispielsweise 4 X Liter, ist dann nur in einem Härtebereich von Y bis 2 Y zulässig, während für den Härtebereich von 2 Y + 1 bis 4 Y das halbe Wasservolumen, beispielsweise also 2 X Liter ausgewählt werden muß. Auf diese Weise kann eine erfindungsgemäße Vorrichtung von identischer Dimensionierung für sämtliche denkbaren Härtebereiche des zu behandelnden Wassers eingesetzt werden.

Aus der DE 35 06 042 A1 ist zwar bereits ein Verfahren zur Steuerung von Wasseraufbereitungsanlagen bekannt, in der ebenfalls die Regeneriermittelmenge in Abhängigkeit einer äußeren Einflußgröße variiert wird. Bei diesem Verfahren wird jedoch nicht die Gesamthärte des zu behandelnden Wassers für die Wahl der Regeneriermittelmenge zugrundegelegt, sondern lediglich das Volumen des behandelten Wassers gemessen und bei Erreichen des vorgegebenen Regenerationszeitpunktes die Regeneration des Ionenaustauschers eingeleitet.

Die für die Regeneration bereitgestellte Regeneriermittelmenge ist der behandelten Wassermenge proportional. Dieses zu realisieren ist jedoch ausgesprochen aufwendig.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebiger Kombination Anwendung finden. Es zeigen:
- Fig. 1: ein schematisches Funktionsschema der erfindungsgemäßen Anlage nach Beispiel 1;
- Fig. 2: ein schematisches Funktionsschema einer erfindungsgemäßen Anlage nach Beispiel 2;
- Fig. 3: ein schematisches Funktionsschema einer erfindungsgemäßen Anlage nach Beispiel 3;
- Fig. 4a-c: schematische Funktionsschemata einer erfindungsgemäßen Anlage nach Beispiel 4;
- Fig. 5: einen schematischen Längsschnitt durch eine erfindungsgemäße Dosiervorrichtung nach Beispiel 5; und
- Fig. 6: einen schematischen Längsschnitt durch eine erfindungsgemäße Dosiervorrichtung nach Beispiel 6.

Die vorliegende Erfindung gliedert sich in zwei funktionell voneinander unabhängige, im Hinblick auf den erstrebten Erfolg einer einfachen, kompakten Anlage technisch zusammenwirkende Teilbereiche. Der erste Teilbereich ist ein den Leitungswasserdruck als Energiequelle ausnutzender Antrieb eines auf einer Nockenwelle, einer Nockenscheibe oder in Keramikscheiben festgelegten Ventilsteuerungsprogrammes. Das unter Druck stehende Leitungswasser wird über ein kurzzeitig geöffnetes (Magnet-) Ventil 1, 17 in einen Zylinder 4 geleitet. Dort verdrängt es einen Kolben 5, der an seinem dem Druckwasser abgewandten Ende eine Schubstange 6 trägt. Diese Schubstange 6 greift tangential an ein Zahnrad 8 an, wobei aus der Schubbewegung eine Drehbewegung wird, welche das Ventilsteuerungsprogramm antreibt. Haben der Kolben 5 und damit auch die Schubstange 6 ihren maximalen Verschiebeweg zurückgelegt, dann wird das Druckwasserventil geschlossen und eine Feder 11 drückt den Kolben 5 in seine Ausgangsposition zurück, wobei das im Zylinder 4 befindliche Wasser über ein geöffnetes Ventil oder eine immer geöffnete Drosselstelle abfließen kann. Auf diese Weise wird das Zahnrad 8 nach einer von der Zahnzahl abhängigen Anzahl von Hüben um 360° gedreht. Der Drehwinkel α je Hub beträgt demnach 360°/Zahnzahl. Somit wird mit diesem einfachen und preiswerten Aufbau die Funktion eines Schrittmotors realisiert. Die Ansteuerung des Druckwasserventils läßt sich sehr einfach auf elektronischem Wege bewerkstelligen.

Der zweite Teilbereich der vorliegenden Erfindung löst das Problem der Bereitstellung eines präzisen Regeneriermittelvolumens. Dieses läßt sich mit dem oben beschriebenen Antriebsmechanismus hervorragend genau und praktisch kostenneutral realisieren, indem das Antriebswasser- (also das Abwasser-) volumen so ausgelegt wird, daß es dem erforderlichen Nachspeisewasservolumen entspricht. Das durch den Kolben 5 bei dessen Weg zu seiner Ruheposition aus dem Zylinder 4 verdrängte Wasservolumen wird in den Salzvorratsbehälter 14 eingebracht. Dort löst es das Regeneriersalz und steht dann als exakt abgemessenes Regeneriermittel zur Verfügung.

Die konkrete Abmessung des erforderlichen Volumens läßt sich leicht über den Zylinderdurchmesser, den vorzugsweise variablen maximalen Kolbenhubweg und über die Zahnzahl des Zahnrades 8 je Regenerationsvorgang, also über die Hubzahl des Kolbens 5 realisieren. Der maximale Kolbenhubweg ist als einzige Größe auch nachträglich noch veränderbar und zwar auch schon ohne weitere Maßnahmen bereits dadurch, daß sich der Kolbenhubweg zwischen 1 Zahnabstand < Kolbenhubweg < 2 Zahnabstände bewegen kann, um bei einem Hubvorgang das Zahnrad 8 jeweils um nur einen Zahn weiterzudrehen.

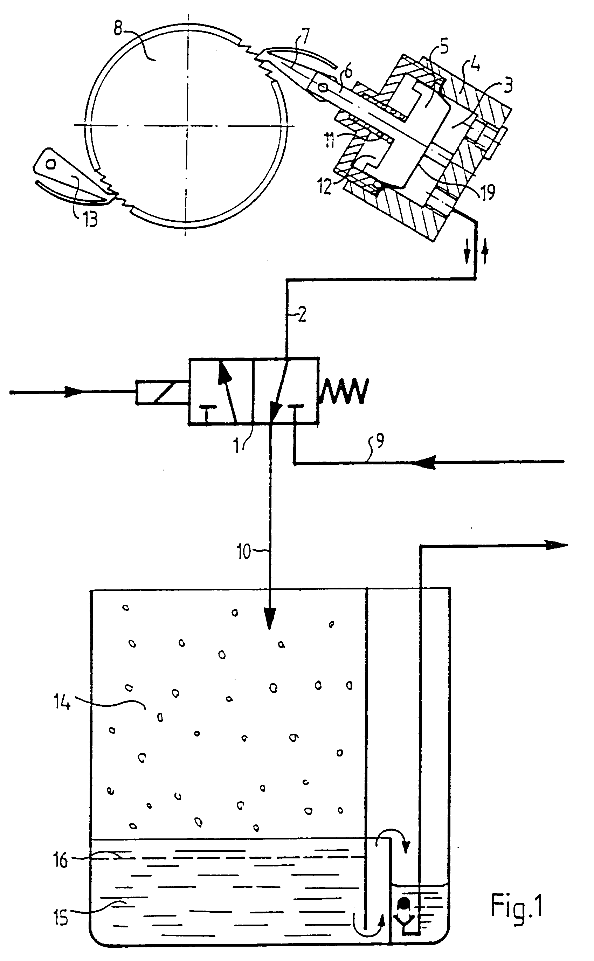

### 1. Beispiel (Fig. 1):

Das erste Beispiel stellt eine besonders vorteilhafte Ausführungsform dar. Über ein von einer Steuerelektronik angesteuertes 3/2 Wege-Ventil 1 und über eine Leitung 2 wird Druckwasser aus einem Druckwasserzulauf 9 vom Wassernetz in einen Druckbereich 3 eines vom Gehäuse 4 gebildeten Zylinders gefördert. Hierdurch wird ein durch eine Membrane 19 vom Druckbereich 3 abgedichteter Kolben 5, der auf seiner dem Druckbereich 3 abgewandten Seite eine Schubstange 6 trägt, in die Richtung der Schubstange verdrängt. Die Schubstange greift mit ihrer Klinke 7 tangential an einem Zahnrad 8 an und dreht es um den Winkel α = 360°/Zahnzahl. So wird aus der Hubkolbenbewegung auf äußerst einfache und elegante Weise eine Drehbewegung, mit der eine Nockenwelle, eine Nockenscheibe, ein Keramikscheibenpaar etc. angetrieben werden kann. Hat der Kolben 5 seinen maximal möglichen Weg zurückgelegt, dann schließt das 3/2 Wege-Ventil 1 den Druckwasserzulauf 9 und öffnet einen Abwasserauslaß 10. Hierdurch sinkt der Druck im Druckbereich 3 und eine Feder 11 in der nicht gegen die Umgebung abgedichteten federseitigen Zylinderkammer 12 schiebt den Kolben 5 wieder in seine Ruhelage zurück. Das im Druckbereich 3 befindliche Wasser wird somit über die Leitung 2, das 3/2 Wege-Ventil 1 und die Abwasserleitung 10 abgeführt. Die Klinke 7 fährt hierbei wieder zurück und rastet in den nächsten Zahn des Zahnrades 8 ein. Eine weitere Klinke 13 verhindert ein Zurückdrehen des Zahnrades 8.

Wird diese Antriebsvorrichtung zum Antrieb des Ventilsteuerprogrammes eines Ionentauschers verwendet, bei dem notwendigerweise je Regenerationsvorgang eine bestimmte Menge an Regeneniersole einerseits bereitet und andererseits bereitgestellt werden muß, so wird das über die Leitung 10 abfließende Abwasser des Hubkolbens über einen Salzvorrat 14 einem vom Salzvorrat durch einen Siebboden 16 getrennten Solevorrat 15 zugeführt. Je Hubvorgang, d.h. je Verdrehwinkel α des Zahnrades (360°/Zahnzahl) wird so ein bestimmtes, über den Kolbenhub und die Kolbenquerschnittsfläche genau definiertes Wasservolumen erzeugt. Das Hubkolbensystem kann über das Hubvolumen und die für die Durchführung eines Regenerationsvorganges erforderliche Hubzahl präzise die für die Regeneriersolebereitung erforderliche Nachspeisewassermenge abmessen und dem Salzbehälter zuführen.

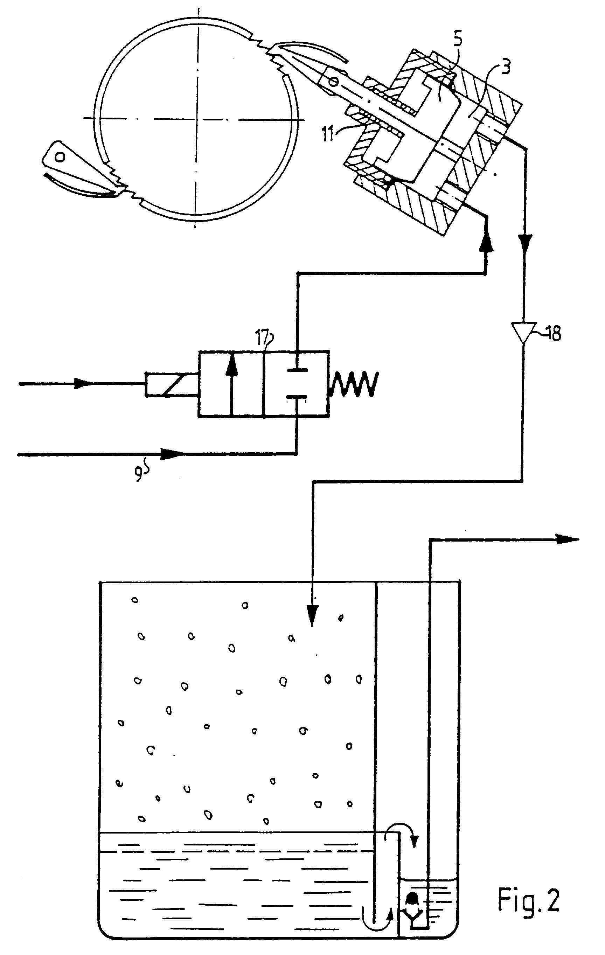

### 2. Beispiel (Fig. 2):

Das 2. Beispiel entspricht dem 1. Beispiel mit dem Unterschied, daß das relativ teure 3/2 Wege-Ventil 1 durch ein wesentlich preiswerteres 2/2 Wege-Ventil 17 ersetzt ist. Damit das Druckwasser nach dem Schließen des 2/2 Wege-Ventils 17 wieder abfließen kann, muß mit einer Drosseldüse 18 eine Zwangsöffnung hergestellt werden, durch die beim Rückstellvorgang des von der Feder 11 wieder in die Ruhelage geschobenen Kolbens 5 das in den Zylinder eingeleitete Druckwasser als Abwasser aus dem Druckbereich 3 entfernt wird. Diese Drosseldüse 18 ist auch geöffnet, während das Ventil 17 geöffnet ist. So fließt also immer eine gewisse Wassermenge ungenutzt ab. Es handelt sich je Hubvorgang jedoch nur um einige Milliliter. Kritisch wird diese Anordnung lediglich, wenn das Abwasser zur volumengenauen Nachspeisewasserdosierung verwendet werden soll. Hier ist es dann erforderlich, den Leitungswasserdruck über einen in der Zeichnung nicht dargestellten Druckminderer zu definieren, so daß bei einem definierten Drosseldüsenquerschnitt und einer definierten Öffnungszeit des Ventils 17 je Hubvorgang wieder eine exakt definierte Abwassermenge pro Hubvorgang erzeugt wird.

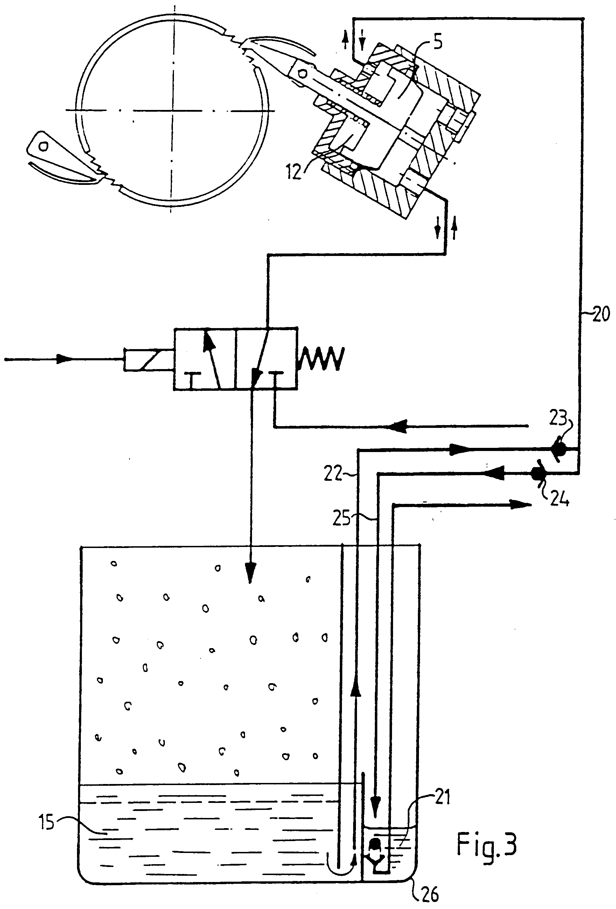

### 3. Beispiel (Fig. 3):

Das 3. Beispiel unterscheidet sich vom 1. Beispiel dadurch, daß die federseitige Zylinderkammer 12 gegen die Umgebung abgedichtet ist und eine Verbindungsleitung 20 zum Solevorrat 15 bzw. zur bereitgestellten Regeniersole 21 aufweist. Bei einem Rückstellvorgang des Kolbens 5 wird über eine Ansaugleitung 22 und ein Rückschlagventil 23 eine exakte Solemenge aus dem Solevorrat 15 angesaugt und beim Schubvorgang wieder aus der Zylinderkammer 12 verdrängt und über die Verbindungsleitung 20, ein weiteres Rückschlagventil 24 und eine Leitung 25 in eine Bereitstellungskammer 26 für die bereitzustellende Regeneriersole gefördert. So wird also mit einem Pumpvorgang sowohl das Ventilsteuerungsprogramm um einen bestimmten Winkel weitergedreht, als auch ein definierter Bruchteil des für die Solebereitung für eine Regeneration erforderlichen Nachspeisewasservolumens gefördert und ebenso ein definierter Bruchteil des für eine Regeneration erforderlichen Regeneriersolevolumens vom Solevorrat 15 in die Bereitstellungskammer 26.

Beim Betrieb einer Enthärtungsanlage richten sich die Regenerationsintervalle entweder nach der Zeit (z.B. Regeneration einmal wöchentlich) oder bei moderneren Anlagen nach der behandelten Wassermenge. Letzteres ist aus Gründen des Umweltschutzes (verbrauchsabhängige Regeneration) sicher die bessere Lösung. Neben der durch die Anlage geflossenen Wassermenge ist jedoch auch die Qualität des zu behandelnden Wassers zu berücksichtigen, d.h. die Konzentration der im Wasser enthaltenen Härtebildner Kalzium (Ca) und Magnesium (Mg). Die Konzentration dieser Härtebildner wird üblicherweise im Summenparamter Gesamthärte zusammengefaßt. Multipliziert man diese Gesamthärte mit dem zwischen zwei Regenerationen behandelten Wasservolumen, so erhält man diejenige Gesamtmenge an Kalzium und Magnesium, die von der Enthärtungsanlage zwischen zwei Regenerationen aus dem zu behandelnden Wasser entfernt werden kann.

Diese oben genannte Gesamtmenge hängt neben der Betriebsweise, der eingesetzten Ionenaustauscherharzmenge und der Regeneriermittelausnutzung insbesondere von der eingesetzten Regeneriermittelmenge ab. Da die Einstellung der Regeneriermittelmenge je Regeneration bei kleinen Anlagen und kleinen Regeneriermittelmengen nur relativ ungenau sein kann, werden Enthärtungsanlagen in der Hauswassertechnik üblicherweise mit einer konstanten Regeneriermittelmenge je Regeneration regeneriert und zwar unabhängig von der Gesamthärte des zu behandelnden Wassers. Dies bedingt naturgemäß, daß die z.B. von einem Wasserzähler überwachte behandelte Wassermenge bei einer größeren Gesamthärte nur kleiner sein darf als bei einer geringeren Gesamthärte. Bei der Installation einer solchen Enthärtungsanlage muß also in Abhängigkeit von der örtlichen Gesamthärte die Regenerationsauslösung entsprechend der bei der angetroffenen Gesamthärte maximal behandelbaren Wassermenge eingestellt werden.

Mit der oben vorgestellten Erfindung eröffnen sich jedoch überraschenderweise völlig neue Möglichkeiten:
Mit der volumengenauen Nachspeisung des Frischwassers zur Solebereitung hat man auf ebenso überraschende wie einfache Weise ein Verfahren bzw. eine Vorrichtung verfügbar, mit deren Hilfe eine von der Gesamthärte des zu behandelnden Wassers abhängige Regeneriermittelmenge bereitet werden kann. Es muß also nicht mehr in Abhängigkeit von der Gesamtwasserhärte das maximal behandelbare Wasservolumen eingestellt werden (dies läßt sich zwar relativ präzise bewerkstelligen, bedeutet jedoch einen beträchtlichen elektronischen oder mechanischen Aufwand), sondern es wird bei konstantem, behandeltem Wasservolumen pro Betriebszyklus zwischen zwei Regenerationen der Regeneriermittelbedarf der Wasserhärte angepaßt.

Bereits weiter oben ist beschrieben, daß der maximale Kolbenhubweg des Kolbens 5 einstellbar ist und zwar insbesondere im Bereich zwischen einem und zwei Zahnabständen des Zahnrades 8. Diese geringfügige, auch ohne besondere konstruktive Maßnahmen vorhandene Variationsmöglichkeit soll insbesondere zur Feineinstellung und zum Ausgleich von Fertigungstoleranzen bezüglich des exakten Pumpvolumens dienen.

Die hier vorgestellte Erfindung geht jedoch wesentlich weiter. Durch eine einfache Klinkenführung 27 kann erreicht werden, daß die Klinke 7 bei jedem Vorhub immer nur in den nächstmöglichen Zahnzwischenraum des Zahnrades 8 eingreift. Hierdurch gewinnt man die Freiheit, den Kolbenhubweg nahezu beliebig zu vergrößern. Zwischen dem für den Zahnradantrieb erforderlichen Mindestkolbenhubweg und dem durch die Zylinderlänge begrenzten maximalen Kolbenhubweg kann das Hubvolumen dieser Pumpe auf einfache Weise eingestellt und somit variiert werden. Da die Hubzahl je Regenerationszyklus konstant ist, kann somit das je Regenerationszyklus geförderte Nachspeisewasservolumen stufenlos eingestellt und präzise abgemessen werden.

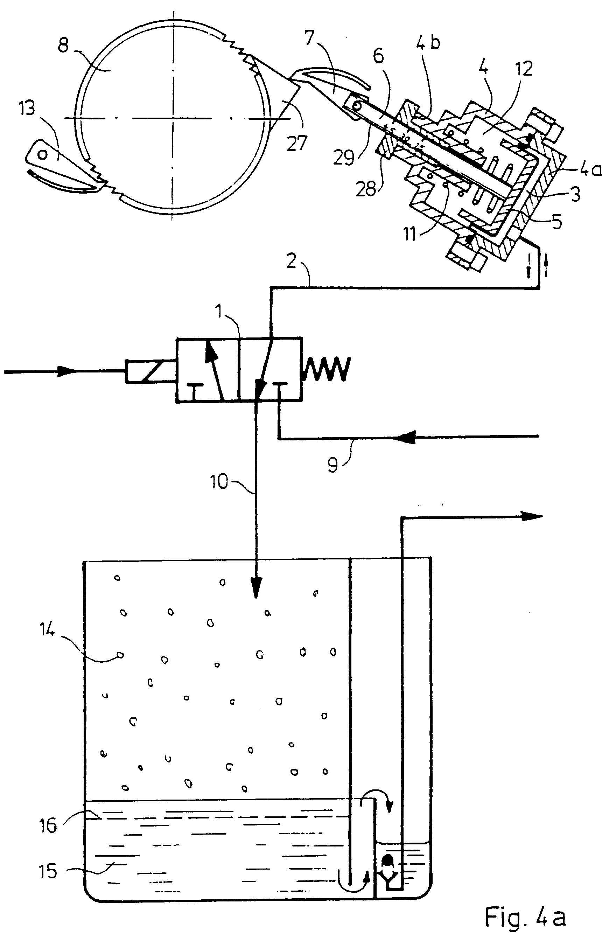

### 4. Beispiel (Fig. 4a - 4c):

In Fig. 4a ist ein solcher Kolbenantrieb mit Nachspeisewasserdosierung abgebildet, dessen Hubvolumen und damit das Nachspeisewasservolumen über eine Stellmutter 28 auf einem auf der Schubstange 6 vorgesehenen Außengewinde 29 einstellbar ist. Im vorliegenden Beispiel ist die Stellmutter 28 auf die Zahl 45 (dies entspricht einer Wasserhärte von 45 °dH) eingestellt. Hierdurch kann der Kolben 5 in seiner Ruhelage nahezu bis zur Rückwand 4a des Zylindergehäuses zurückfahren, wenn die Stellmutter 28 bedingt durch die Rückstellkraft der Feder 11 an einen starr mit dem Zylinder 4 verbundenen Anschlag 4b anschlägt. Stellt nun das Magnetventil 1 die Verbindung zwischen dem Druckbereich 3 und der Druckwasserleitung her, so strömt Wasser über die Leitung 2 in den Druckbereich 3 und schiebt den Kolben 5 gegen die Federkraft in die Richtung des Zahnrades 8. Die Klinkenführung 27 führt zu dem definierten Eingreifen der Klinke 7 tangential am Zahnrad 8, so daß bei jeder Schubbewegung immer nur in den nächsten Zahnzwischenraum eingegriffen und das Zahnrad um den entsprechenden Drehwinkel weitergedreht wird.

Das beim Umschalten des Magnetventiles 1 aus dem Druckbereich 3 in den Salzvorratsbehälter 14 geförderte Nachspeisewasservolumen ist naturgemäß abhängig vom Hubvolumen des Antriebselementes. Dies bedeutet, je weiter der Kolben zurückfahren kann, um seine Ruhelage zu erreichen, um so größer ist das pro Antriebshub geförderte Nachspeisewasservolumen.

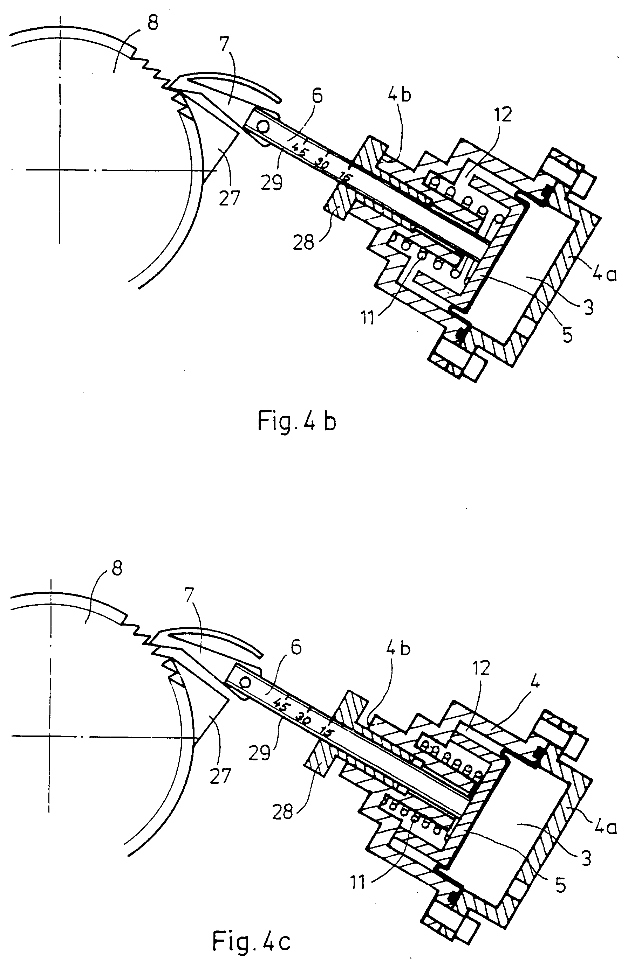

In Fig. 4b und 4c ist diese Antriebs- und Nachspeisewasserdosiereinheit nochmals vergrößert dargestellt und zwar mit auf 15 eingestellter Stellmutter 28 (für eine Wasserhärte von 15 °dH). Man erkennt in Fig. 4b, daß bei dieser Einstellung der Rückhubweg bis zur Ruhelage wesentlich kürzer ist als bei der Einstellung 45. Dementsprechend ist das Hubvolumen zwischen der in Fig. 4b dargestellten Ruhelage und der in Fig. 4c dargestellten maximalen Schubposition entsprechend kleiner. Es wird also pro Schubvorgang ein entsprechend kleineres Nachspeisewasservolumen in den Salzvorratsbehälter 14 dosiert.

Mit dieser Vorrichtung ist es auf einfache Weise möglich, über das einstellbare Nachspeisewasservolumen die Regeneriermittelmenge je Regeneration einzustellen bzw. vorzugeben, um somit unabhängig von der örtlichen Wasserhärte ein konstantes Wasservolumen je Regeneration behandeln zu können.

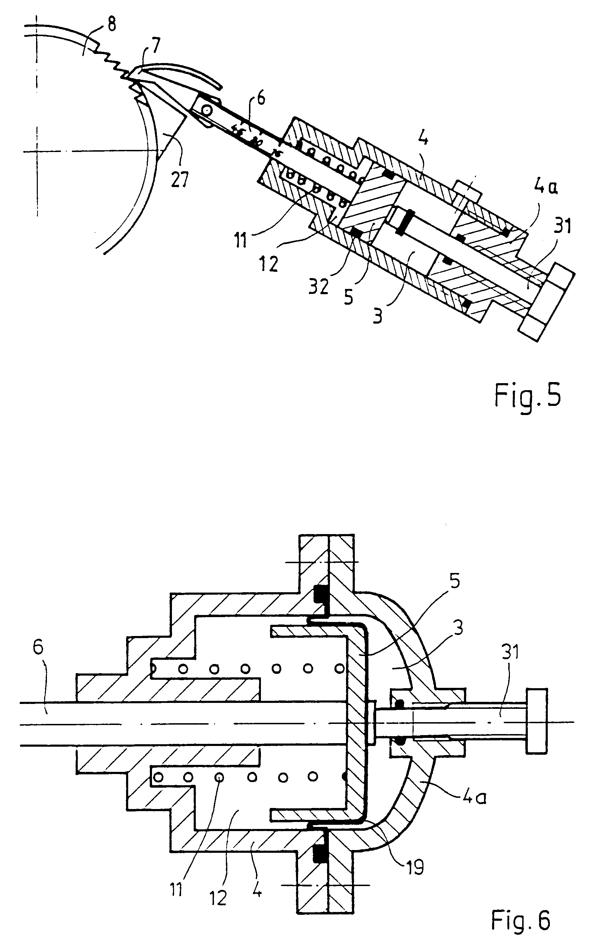

### 5. Beispiel (Fig. 5):

Bei einer zu den Beispielen 1 bis 4 alternativen Ausführungsform wird die Abdichtung vom Druckraum 3 zur Schubstangenseite hin nicht mit einer Gummimembrane 30 (bevorzugt wird hier eine sogenannte Rollmembrane verwendet) realisiert, sondern der Kolben 5 wird mit einem oder mehreren O-Ringen gegenüber der zylindrischen Innenwand des Gehäuses 4 abgedichtet.

### 6. Beispiel (Fig. 6):

Entsprechend Fig. 6 kann die Ruheposition des Kolbens 5 auch mit einer auf der Druckseite 3 in die Gehäuserückwand 4a integrierten Stellschraube 31 eingestellt werden. Der Vorteil dieser Variante ist in einer komfortableren Einstellmöglichkeit zu sehen. Nachteilig ist jedoch die erforderliche Abdichtung der Stellschraube zwischen Druckraum 3 und der Umgebung.

Das maximal mögliche Hubvolumen muß so dimensioniert werden, daß auch bei der größten zulässigen Wasserhärte eine ausreichende Regeneriermittelmenge (über das dosierte Nachspeisewasservolumen) hergestellt werden kann. Bei einem Einsatzbereich von z.B. 15 °dH (15 ° deutsche Gesamthärte) bis 45 °dH muß bei einer konstanten Produktwassermenge erfahrungsgemäß bei 45 °dH die 4 - 5fache Regeneriermittelmenge hergestellt werden wie bei 15 °dH. Dies bedeutet natürlich auch eine entsprechende Variation des Hubvolumens um den Faktor 4 - 5. Hierdurch wird die Antriebs- und Dosiervorrichtung unter Umständen recht großvolumig, da sie ja auf das größte zu fördernde Volumen ausgelegt sein muß. Dies führt zu höheren Herstellungskosten.

### 7. Beispiel:

Eine besonders vorteilhafte Ausführungsform besteht daher aus einem Wasserzähler mit dazugehörender Elektronik, der die Regeneration der Enthärtungsanlage vorwählbar nach X Liter oder nach 2 X Liter auslöst. 2 X Liter Wasser können z.B. bei 12 - 24 °d Gesamthärte behandelt werden. Der Kolbenhub muß hierbei nur um den Faktor 2 - 3 vom minimalen (12 °dH) bis zum maximalen (24 °dH) Hubvolumen variiert werden.

X Liter Wasser (also exakt die Hälfte) können behandelt werden, wenn die Gesamthärte im Bereich von 25 - 48 °dH liegt. Bei 25 °dH wird der Kolbenhub auf den gleichen Hubweg wie zuvor bei 12 °dH eingestellt und bei 48 °dH auf den zuvor schon bei 24 °dH eingestellten Maximalhub. Zwischenwerte gelten entsprechend. Hierdurch kann das erforderliche maximale Hubvolumen halbiert werden. Im Härtebereich bis z.B. 24 °dH kann zwischen zwei Regenerationen die volle Produktwassermenge behandelt werden, und nur bei extrem harten Wässern von z.B. 25 °d - 48 °dH wird die Produktwassermenge halbiert, d.h., es muß entsprechend öfter regeneriert werden.

Allgemein wird das Volumen des zu behandelnden Wassers pro Betriebszyklus als Vielfaches 2ⁿ · X eines minimalen Wasservolumens X gewählt, wobei n = 0, 1, 2, 3 ... sein kann.

Für die oben erwähnte Wasserhärte wird die Stoffmengenkonzentration der Erdalkali-Ionen je kg (mmol/kg) verwendet. Ein Grad deutscher Härte (°dH) entspricht 0,1785 mmol Erdalkali-Ionen je kg. Man unterscheidet auch noch französische (°fH), englische (°eH) und amerikanische Härte (ppm, d.h. 1 Teil auf 10⁶ Teile). Die Umrechnungsfaktoren sind der nachfolgenden Tabelle zu entnehmen:

| | mmol/kg | °dH | °fH | °eH | ppm |
|---|---|---|---|---|---|
| 1 mmol/kg | 1,0 | 5,6 | 10,0 | 7,0 | 100,0 |
| 1 °dH | 0,1785 | 1,0 | 1,79 | 1,25 | 17,9 |
| 1 °fH | 0,1 | 0,56 | 1,0 | 0,7 | 10,0 |
| 1 °eH | 0,143 | 0,8 | 1,43 | 1,0 | 14,3 |
| 1 ppm | 0,01 | 0,056 | 0,1 | 0,07 | 1,0 |

## Patentansprüche

1. Vorrichtung zur Wasseraufbereitung, insbesondere Ionenaustauschvorrichtung für die Hauswasserbehandlung, mit Mitteln zur Aufbereitung von Wasser, insbesondere einem Ionenaustauschermaterial, mit einem Vorratsgefäß für die Bereitstellung einer Regeneriermittellösung zum Regenerieren der Mittel zur Wasseraufbereitung, insbesondere einem Salzsole-Vorratsgefäß, sowie mit einer kolbenhubgesteuerten Dosiervorrichtung für die Zumessung von Nachspeisewasser in das Vorratsgefäß, wobei die Dosiervorrichtung einen hohlzylindrischen Förderkörper aufweist, der einen axial verschiebbaren Kolben enthält, dessen eine axiale Kolbenfläche einem Druckbereich innerhalb des Zylinders zugewandt ist, welcher mit Wasserdruck, vorzugsweise des aufzubereitenden oder des bereits aufbereiteten Wassers, beaufschlagbar ist, während der Kolben auf der dem Druckbereich axial gegenüberliegenden Seite mit Hilfe eines Federelementes, insbesondere einer Schraubenfeder, die sich gegen eine stirnseitige Innenwand des Zylinders abstützt, in die Richtung des Druckbereiches gedrückt wird, und wobei das bei einem Kolbenhub verdrängte Wasservolumen dem Vorratsgefäß zugeführt werden kann,
dadurch gekennzeichnet,
daß der Kolben (5) an einem seiner beiden axialen Enden, vorzugsweise an dem dem Druckbereich (3) abgewandten Ende, eine axial sich erstreckende Schubstange (6) trägt, die tangential an ein Zahnrad (8) angreift und dieses um einen definierten Winkel α in einem festgelegten, gleichbleibenden Drehsinn weiterdrehen kann, wobei das Zahnrad (8) ein mechanisches Ventilsteuerungselement mit zyklischem Steuerprogrammablauf, wie z.B. eine Nockenwelle, eine Nockenscheibe oder dergleichen, antreibt.

2. Vorrichtung nach Anspruch 1, dadurch gekennzeichnet, daß der maximale Kolbenhubweg des Kolbens (5) einstellbar ist.

3. Vorrichtung nach Anspruch 2, dadurch gekennzeichnet, daß die Schubstange (6) zumindest auf einem Teil ihrer axialen Länge ein Außengewinde (29) aufweist, und daß auf dem Außengewinde (29) eine Stellmutter (28) vorgesehen ist, die beim Einfahren der Schubstange (6) in den Zylinder (4) gegen einen mit dem Zylinder (4) starr verbundenen Anschlag (4b) anschlägt.

4. Vorrichtung nach Anspruch 2, dadurch gekennzeichnet, daß der Druckbereich (3) des Zylinders (4) mit einer Rückwand (4a) gegen die äußere Atmosphäre abgeschlossen ist, und daß in der Rückwand (4a), vorzugsweise in axialer Verlängerung der Schubstange (6) ein durchgängiges Schraubgewinde vorgesehen ist, in das eine Stellschraube (31) eingreift, gegen die im eingeschraubten Zustand der Kolben (5) beim Einfahren der Schubstange (6) in den Zylinder (4) anschlägt.

5. Vorrichtung nach Anspruch 4, dadurch gekennzeichnet, daß zwischen dem Schraubgewinde und der Stellschraube (31) Dichtmittel, insbesondere eine O-Ringdichtung vorgesehen sind, die den Druckbereich (3) gegen die äußere Atmosphäre abdichten.

6. Vorrichtung nach einem der vorhergehenden Ansprüche, dadurch gekennzeichnet, daß eine den Kolben (5) enthaltende federseitige Zylinderkammer (12) durch eine insbesondere Gummi oder einen anderen Elastomer-Werkstoff enthaltende Membrane (19), vorzugsweise eine Rollmembrane, vom Druckbereich (3) wasserdicht abgetrennt ist.

7. Vorrichtung nach einem der Ansprüche 1 bis 5, dadurch gekennzeichnet, daß eine die Schubstange (6) teilweise aufnehmende federseitige Zylinderkammer (12) durch eine zwischen dem Kolben (5) und der Zylinderinnenwand des Zylinders (4) vorgesehene O-Ringdichtung vom Druckbereich (3) wasserdicht abgetrennt ist.

8. Vorrichtung nach einem der vorhergehenden Ansprüche, dadurch gekennzeichnet, daß ein 3/2 Wege-Ventil (1) vorgesehen ist, das insbesondere elektrisch oder magnetisch ansteuerbar ist, und in welches eine Zu- und Ablaufleitung (2) für das in den Druckbereich (3) gelangende Wasser, eine Druckwasserzulaufleitung (9) sowie eine in das Vorratsgefäß mündende Abwasserauslaßleitung (10) münden.

9. Vorrichtung nach einem der Ansprüche 1 bis 7, dadurch gekennzeichnet, daß ein 2/2 Wege-Ventil (17) vorgesehen ist, das insbesondere elektrisch oder magnetisch ansteuerbar ist, und in welches einerseits eine Druckwasserzulaufleitung (9), andererseits eine Zulaufleitung für das in den Druckbereich (3) gelangende Wasser münden, und daß in einer Ablaufleitung für das aus dem Druckbereich (3) in das Vorratsgefäß abfließende Wasser ein Drosselorgan, vorzugsweise eine Drosseldüse (18) angeordnet ist.

10. Vorrichtung nach Anspruch 9, dadurch gekennzeichnet, daß in der Druckwasserzulaufleitung (9) oder in der Zulaufleitung für das in den Druckbereich (3) gelangende Wasser ein Druckminderer vorgesehen ist.

11. Vorrichtung nach einem der vorhergehenden Ansprüche, dadurch gekennzeichnet, daß eine vom Druckbereich (3) wasserdicht abgetrennte federseitige Zylinderkammer (12) gegen die äußere Atmosphäre abgedichtet ist, daß eine Verbindungsleitung (20) vorgesehen ist, die einerseits in die Zylinderkammer (12), andererseits nach einer Verzweigungsstelle sowohl in eine mit dem Regeneriermittellösungsvorrat (15) im Vorratsgefäß in Verbindung stehende Ansaugleitung (22) als auch in eine Leitung (25) mündet, welche ihrerseits in eine innerhalb des Vorratsgefäßes abgesonderte Bereitstellungskammer (26) mündet, in der das aktuell benötigte Volumen an Regeneriermittellösung (21) bereitgestellt wird, und daß in der Ansaugleitung (22) ein in Richtung des angesaugten Regeneriermittellösungsstromes sich öffnendes Rückschlagventil (23) und in der Leitung (25) ein in Richtung des in die Bereitstellungskammer (26) abfließenden Stromes sich öffnendes weiteres Rückschlagventil (24) vorgesehen ist.

12. Vorrichtung nach einem der vorhergehenden Ansprüche, dadurch gekennzeichnet, daß das mechanische Ventilsteuerungselement ein Keramikscheibenpaar mit integrierten Steuerventilen in Form von definierten scharfkantigen Durchbrüchen umfaßt.

13. Vorrichtung nach einem der vorhergehenden Ansprüche, dadurch gekennzeichnet, daß das Volumen des Vorratsgefäßes, insbesondere das Volumen des Regeneriermittellösungsvorrates (15), größer als das Volumen des Zylinders (4), vorzugsweise ein ganzzahliges Vielfaches des Zylindervolumens ist.

14. Vorrichtung zum Antrieb eines mechanischen Ventilsteuerungselementes mit zyklischem Steuerprogrammablauf für den Einsatz bei Wasserbehandlungsgeräten mit regenerierbaren Mitteln zur Wasseraufbereitung, dadurch gekennzeichnet, daß das Ventilsteuerungselement insbesondere eine Nockenwelle, eine Nockenscheibe oder ein Keramikscheibenpaar mit integrierten Steuerventilen in Form von definierten scharfkantigen Durchbrüchen umfaßt, und von einem Zahnrad (8) angetrieben wird, an dessen Zähne tangential eine mit einem druckwassergetriebenen Hubkolben (5) verbundene Schubstange (6) über eine Klinke (7) angreift, so daß das Zahnrad (8) bei jedem Kolbenhub um einen definierten Winkel α in einem gleichbleibenden Drehsinn weitergedreht wird.

15. Vorrichtung nach Anspruch 14, dadurch gekennzeichnet, daß eine weitere Klinke (13) vorgesehen ist, die an einer anderen Stelle als die Klinke (7) am Umfang des Zahnrades (8) tangential in der Weise eingreift, daß ein Zurückdrehen des Zahnrades (8) ausgeschlossen ist.

16. Vorrichtung nach einem der vorhergehenden Ansprüche, dadurch gekennzeichnet, daß die Zähne des Zahnrades (8) sägezahnförmig ausgebildet sind.

17. Vorrichtung nach einem der vorhergehenden Ansprüche, dadurch gekennzeichnet, daß am Umfang des Zahnrades (8) eine Klinkenführung (27) vorgesehen ist, gegen die eine an dem dem Zylinder (4) abgewandten Ende der Schubstange (6) vorgesehene Klinke (7) leicht vorgespannt ist, so daß die Klinke (7) beim Ausfahren der Schubstange (6) aus dem Zylinder (4) zunächst gegen die Klinkenführung (27) drückt und nach dem Überfahren der Klinkenführung (27) in den nächsten erreichbaren Zwischenraum zwischen zwei Zähnen des Zahnrades (8) einrastet.

18. Verfahren zum Betrieb einer Vorrichtung mit einstellbarem maximalen Kolbenhubweg nach einem der Ansprüche 2-13, dadurch gekennzeichnet, daß die zum Regenerieren der Mittel zur Wasseraufbereitung bereitzustellende Volumenmenge an Regeneriermittellösung in Abhängigkeit von der Gesamthärte des in einem Betriebszyklus zu behandelnden Wasservolumens festgelegt und die bei gleichbleibender Anzahl von Kolbenhüben pro Regenerationsvorgang von dem druckwassergetriebenen Hubkolben (5) geförderte Volumenmenge an Regeneriermittellösung durch entsprechende Einstellung des maximalen Kolbenhubweges mit der festgelegten Volumenmenge in Übereinstimmung gebracht wird.

19. Verfahren nach Anspruch 18, dadurch gekennzeichnet, daß das Volumen des in einem Betriebszyklus vor Einleitung des nächsten Regenerationsvorganges zu behandelnden Wassers als Vielfaches 2ⁿ · X eines minimalen Wasservolumens X vor Beginn des Betriebszyklus festgelegt wird, wobei n = 0, 1, 2, 3 ... sein kann, und wobei mit zunehmender Gesamthärte des zu behandelnden Wassers kleinere Vielfache 2ⁿ · X ausgewählt werden.

20. Verwendung einer Vorrichtung nach einem der Ansprüche 1 bis 17 in einer Enthärtungs-, Entsäuerungs-, Enteisenungs- oder Entmanganungsanlage.

## Claims

1. Device for the treatment of water, in particular an ion exchange device for the treatment of domestic water, with means for the treatment of water, in particular an ion exchanger material with a supply container for providing a regeneration agent solution for the regeneration of the means for the water treatment, in particular a brine supply container, as well as with a piston-stroke controlled metering device for allotting feed-water into the supply container, wherein the metering device comprises a hollow cylindrical delivery body which contains a piston which is axially displaceable and one axial surface of which faces a pressure area within the cylinder, which can be acted upon with water pressure, preferably of the water to be treated or of the water which has already been treated, whereas the piston is pressed in the direction of the pressure area by means of a spring element on the side axially opposite to the pressure area, in particular a helical spring, which is supported against an end-faced inner wall of the cylinder, and wherein the water volume which is displaced with a piston stroke can be fed to the supply container, characterized in that the piston (5) carries at one of its two axial ends, preferably at the end facing away from the pressure area (3), a connecting rod (6) which extends in an axial direction and engages tangentially in a toothed wheel (8) and can turn the latter by a particular angle α in a fixed constant direction of rotation, wherein the toothed wheel (8) drives a mechanical valve control element with a cyclic control program course, such as for example a camshaft, a cam plate or the like.

2. Device according to claim 1, characterized in that the maximum length of the piston (5) stroke path can be set.

3. Device according to claim 2, characterized in that the connecting rod (6) comprises at least at one part of its axial length an outer thread (29) and that an adjusting nut (28) is provided on the outer thread (29) which strikes a stopper (4b) which is rigidly connected to the cylinder (4) when the connecting rod (6) is inserted in the cylinder (4).

4. Device according to claim 2, characterized in that the pressure area (3) of the cylinder (4) is closed off by a rear wall (4a) against the outer atmosphere and that the rear wall (4a) is provided, preferably in the axial extension of the connecting rod (6), with a continuous screw thread, in which an adjusting screw (31) engages, against which the piston (5) strikes in the screwed in state when the connecting rod (6) is inserted in the cylinder (4).

5. Device according to claim 4, characterized in that between the screw thread and the adjusting screw (31) sealing means, in particular an O-ring seal, are provided which seal the pressure area (3) off against the outer atmosphere.

6. Device according to one of the preceding claims, characterized in that a cylinder chamber (12) located on the side of the spring and containing the piston (5) is separated from the pressure area (3) in a water-tight manner by means of a diaphragm (19), preferably a rolling diaphragm, which contains in particular rubber or another elastomer material.

7. Device according to one of the claims 1 through 5, characterized in that a cylinder chamber (12) located on the side of the spring and partly receiving the connecting rod (6) is separated from the pressure area (3) in a water-tight manner by means of an O-ring seal provided between the piston (5) and the inner cylindrical wall of the cylinder (4).

8. Device according to one of the preceding claims, characterized in that a 3/2 ways valve (1), is provided which can be controlled in particular electrically or magnetically, and in which terminate a supply and outlet duct (2) for the water reaching the pressure area (3), a pressurized water supply duct (9) as well as a waste water outlet duct (10) which terminates in the supply container.

9. Device according to one of the claims 1 through 7, characterized in that a 2/2 ways valve (17) is provided which can be controlled in particular electrically or magnetically and in which on the one hand a pressurized water supply duct (9) and on the other hand a supply duct for the water reaching the pressure area (3) terminate, and that a throttle organ, preferably a throttle nozzle (18) is disposed in an outlet duct for the water flowing from the pressure area (3) into the supply container.

10. Device according to claim 9, characterized in that a pressure reducer is provided in the pressure water supply duct (9) or in the supply duct for the water reaching the pressure area (3).

11. Device according to one of the preceding claims, characterized in that a cylinder chamber (12) located on the side of the spring and being sealed off from the pressure area (3) in a water-tight manner, is sealed off against the outer atmosphere, that a connecting duct (20) is provided which on the one hand terminates in the cylinder chamber (12) and on the other hand after a branching point in a suction duct (22) which is in connection with the regeneration agent solution supply (15) in the supply container and also in a duct (25) which again terminates in a provision chamber (26) which is separated within the supply container and in which the currently required volume of regeneration agent solution (21) is provided and that the suction duct (22) is provided with a non-return valve (23) which opens in the direction of the sucked regeneration agent solution flow and the duct (25) is provided with a further non-return valve (24) which opens in the direction of the flow flowing into the provision chamber (26).

12. Device according to one of the preceding claims, characterized in that the mechanical valve control element comprises a ceramic disc pair with integrated control valves in the form of defined openings with sharp edges.

13. Device according to one of the preceding claims, characterized in that the volume of the supply container, in particular the volume of the regeneration agent solution supply (15) is larger than the volume of the cylinder (4), preferably an integral multiple of the cylinder volume.

14. Device for driving a mechanical valve control element with cyclic control program course for the use in water treatment devices with regeneratable means for the treatment of water, characterized in that the valve control element comprises in particular a camshaft, a cam plate or a ceramic disc pair with integrated control valves in the form of defined openings with sharp edges and is driven by a toothed wheel (8) at the teeth of which a connecting rod (6), which is connected with a piston (5) driven by pressurized water, engages tangentially via a catch (7) such that the toothed wheel (8) is turned with each piston stroke by a particular angle α in a constant direction of rotation.

15. Device according to claim 14, characterized in that a further catch (13) is provided which engages tangentially on the circumference of the toothed wheel (8) at a different point than the first catch (7) in a manner such that a turning back of the toothed wheel (8) is not possible.

16. Device according to one of the preceding claims, characterized in that the teeth of the toothed wheel (8) are formed as serrations.

17. Device according to one of the preceding claims, characterized in that at the circumference of the toothed wheel (8) a catch guidance (27) is provided against which a catch (7) provided at the end of the connecting rod (6) which faces away from the cylinder (4), is slightly pretensioned such that the catch (7), when the connecting rod (6) is extending from the cylinder (4), presses at first against the catch guidance (27) and engages in the next reachable space between two teeth of the toothed wheel (8) after crossing the catch guidance (27).

18. Method of operating a device with a settable maximum piston stroke path according to one of the claims 2 through 13, characterized in that the volume amount of regeneration agent solution to be provided for the regeneration of the means for the treatment of water is determined in dependence upon the total hardness of the water volume to be treated in an operational cycle and the volume amount of regeneration agent solution delivered by the lifting piston (5), driven by the pressurized water, with a constant amount of piston strokes for each regeneration process is brought into correspondence with the determined volume amount by correspondingly setting the maximum piston stroke path.

19. Method according to claim 18, characterized in that the volume of the water to be treated in one operational cycle before the start of the following regeneration process is determined as a multiple 2ⁿ · X of a minimum water volume X before the start of the operational cycle, wherein n may be 0, 1, 2, 3 ... and wherein with an increasing total hardness of the water to be treated smaller multiples 2ⁿ · X are selected.

20. The use of a device according to one of the claims 1 through 17 in a softening, neutralization, deferrization or demanganization plant.

## Revendications

1. Dispositif de traitement d'eau en particulier dispositif d'échange d'ions pour le traitement d'eaux ménagères, comprenant des moyens pour le traitement d'eau, en particulier une matière d'échange d'ions, un réservoir pour tenir prête une solution de produit de régénération destinée à la régénération des moyens de traitement d'eau, en particulier un réservoir à saumure, ainsi qu'un dispositif de dosage commandé par une course de piston pour la mesure d'eau de réalimentation dans le réservoir, le dispositif de dosage présentant un corps de transport cylindrique creux, qui contient un piston déplaçable axialement dont une surface axiale est adjacente à une zone de pression à l'intérieur du cylindre qui peut être sollicitée par une pression d'eau, de préférence de l'eau à traiter ou de l'eau déjà traitée, tandis que le piston, du côté axialement opposé à la zone de pression, est pressé dans le sens de la zone de pression à l'aide d'un élément de ressort, en particulier un ressort hélicoïdal qui s'appuie contre une paroi interne du côté frontal du cylindre, le volume d'eau transporté au cours d'une course du piston pouvant être amené au réservoir,
caractérisé en ce que le piston (5) porte à une de ses deux extrémités axiales, de préférence à l'extrémité située à l'opposé de la zone de pression (3), une tige de poussée (6) qui s'étend axialement, agit tangentiellement sur une roue dentée (8) et peut continuer à tourner celle-ci d'un angle défini α dans un sens de rotation fixé, permanent, la roue dentée (8) entraînant un élément de commande de vanne mécanique à déroulement de programme de commande cyclique, comme par exemple un arbre à cames, un disque à cames ou des éléments analogues.

2. Dispositif suivant la revendication 1, caractérisé en ce que la course maximale du piston (5) peut être ajustée.

3. Dispositif suivant la revendication 2, caractérisé en ce que la tige de poussée (6) présente au moins sur une partie de sa longueur axiale un filet externe (29) et en ce que, sur le filet externe (29), est prévu un écrou de réglage (28) qui, lors de l'enfoncement de la tige de poussée (6) dans le cylindre (4), bute contre une butée (4b) qui est reliée de manière fixe au cylindre (4).

4. Dispositif suivant la revendication 2, caractérisé en ce que la zone de pression (3) du cylindre (4) est fermée vis-à-vis de l'atmosphère extérieure par une paroi arrière (4a) et en ce que, dans la paroi arrière (4a), de préférence dans un prolongement axial de la tige de poussée (6), un taraudage traversant est prévu dans lequel pénètre une vis de réglage (31) contre laquelle, à l'état vissé, le piston (5)) bute lors de la pénétration de la tige de poussée (6) dans le cylindre (4).

5. Dispositif suivant la revendication 4, caractérisé en ce que, entre le taraudage et la vis de réglage (31), sont prévus des moyens d'étanchéité, en particulier un joint torique, qui étanchéifient la zone de pression (3) vis-à-vis de l'atmosphère extérieure.

6. Dispositif suivant l'une des revendications précédentes, caractérisé en ce qu'un compartiment de cylindre (12) du côté ressort, qui contient le piston (5), est isolé d'une manière étanche à l'eau de la zone de pression (3) par une membrane (19), de préférence une membrane à rouleau, contenant en particulier du caout-chouc ou un autre matériau élastomère.

7. Dispositif suivant l'une des revendications 1 à 5, caractérisé en ce qu'un compartiment de cylindre (12) du côté ressort, qui reçoit partiellement la tige de poussée (6), est isolé d'une manière étanche à l'eau de la zone de pression (3) par un joint torique prévu entre le piston (5) et la paroi interne du cylindre (4).

8. Dispositif suivant l'une des revendications précédentes, caractérisé en ce qu'une vanne à 3/2 voies (1) est prévue qui peut être commandée en particulier par voie électrique ou magnétique et dans laquelle débouchent un conduit d'amenée et de sortie (2) pour l'eau parvenant dans la zone de pression (3), un conduit d'alimentation en eau sous pression (9) ainsi qu'un conduit de sortie d'eau résiduaire (10) débouchant dans le réservoir.

9. Dispositif suivant l'une des revendications 1 à 7, caractérisé par le fait qu'une vanne à 2/2 voies (17) est prévue qui peut être commandée en particulier par voie électrique ou magnétique et dans laquelle, d'une part, un conduit d'alimentation en eau sous pression (9), et, d'autre part, un conduit d'amenée pour l'eau parvenant dans la zone de pression (3) débouchent et en ce qu'un organe d'étranglement, de préférence une buse d'étranglement (18), est agencé dans un conduit de sortie pour l'eau qui s'écoule de la zone de pression (3) dans le réservoir.

10. Dispositif suivant la revendication 9, caractérisé en ce qu'un réducteur de pression est prévu dans le conduit d'alimentation en eau sous pression (9) ou dans le conduit d'amenée de l'eau parvenant dans la zone de pression (3).

11. Dispositif suivant l'une des revendications précédentes, caractérisé en ce qu'un compartiment de cylindre (12) du côté ressort, isolé d'une manière étanche à l'eau de la zone de pression (3), est étanchéifié vis-à-vis de l'atmosphère, en ce qu'un conduit de liaison (20) est prévu qui débouche, d'une part, dans le compartiment de cylindre (12), d'autre part, après un endroit d'embranchement, non seulement dans un conduit d'aspiration (22) qui est en communication avec la réserve de solution de produit de régénération (15) du réservoir mais aussi dans un conduit (25) qui à son tour débouche dans un compartiment de maintien à l'état prêt (26) qui est isolé à l'intérieur du réservoir et dans lequel le volume effectivement nécessaire en solution de produit de régénération (21) est tenu prêt, et en ce qu'une soupape de retenue (23) qui s'ouvre dans le sens du courant de solution de produit de régénération aspiré est prévue dans le conduit d'aspiration (22) et une soupape de retenue (24) supplémentaire qui s'ouvre dans le sens du courant qui s'écoule dans le compartiment de maintien à l'état prêt (26) est prévue dans le conduit (25).

12. Dispositif suivant l'une des revendications précédentes, caractérisé en ce que l'élément de commande de vanne mécanique comporte une paire de disques céramiques à vannes de commande intégrées sous la forme d'ouvertures à bords vifs définies.

13. Dispositif suivant l'une des revendications précédentes, caractérisé en ce que le volume du réservoir, en particulier le volume du réservoir de solution de produit de régénération (15), est plus grand que le volume du cylindre (4), de préférence est un multiple entier du volume du cylindre.

14. Dispositif pour l'entraînement d'un élément de commande de vanne mécanique à déroulement de programme de commande cyclique pour la mise en oeuvre dans des appareils de traitement d'eau comportant des moyens régénérables pour le traitement d'eau, caractérisé en ce que l'élément de commande de vanne comporte en particulier un arbre à cames, un disque à cames ou une paire de disques céramiques avec vannes de commande intégrées sous la forme d'ouvertures à bords vifs définies et en ce qu'il est entraîné par une roue dentée (8) sur les dents de laquelle agit de manière tangentielle, par l'intermédiaire d'un cliquet (7), une tige de poussée (6) reliée à un piston (5) déplacé par de l'eau sous pression, de façon que la roue dentée (8) soit amenée à continuer à tourner à chaque course de piston d'un angle défini α dans un sens de rotation permanent.

15. Dispositif suivant la revendication 14, caractérisé en ce qu'un autre cliquet (13) est prévu qui entre en prise de manière tangentielle sur la périphérie de la roue dentée (8) en un autre endroit que le cliquet (7), de manière qu'une rotation en arrière de la roue dentée (8) soit exclue.

16. Dispositif suivant l'une des revendications précédentes, caractérisé en ce que les dents de la roue dentée (8) sont réalisées sous la forme de dents de scie.

17. Dispositif suivant l'une des revendications précédentes, caractérisé en ce que, à la périphérie de la roue dentée (8), est prévu un guidage de cliquet (27) contre lequel un cliquet (7) prévu à l'extrémité de la tige de poussée (6), qui est située à l'opposé du cylindre (4), est légèrement précontraint de façon que le cliquet (7), lors de la sortie de la tige de poussée (6) hors du cylindre (4), presse tout d'abord contre le guidage de cliquet (27) et, après le dépassement du guidage de cliquet (27), s'enclenche dans l'espace intermédiaire atteignable le plus proche entre deux dents de la roue dentée (8).

18. Procédé pour la mise en service d'un dispositif comportant une course de piston maximale ajustable selon l'une des revendications 2-13, caractérisé en ce que la quantité volumique de solution de produit de régénération à tenir prête pour la régénération des moyens de traitement d'eau est fixée en fonction de la dureté globale du volume d'eau à traiter dans un cycle de fonctionnement et en ce que la quantité volumique de solution de produit de régénération, qui est transportée par le piston (5) déplacé par de l'eau sous pression, pour un nombre constant de courses de piston par processus de régénération est amenée en concordance avec la quantité volumique fixée par un ajustement correspondant de la course maximale du piston.

19. Procédé suivant la revendication 18, caractérisé en ce que le volume de l'eau à traiter dans un cycle de fonctionnement, avant déclenchement du processus de régénération suivant, est fixé comme un multiple 2ⁿ . X d'un volume d'eau minimal X avant le début du cycle de fonctionnement, n pouvant être égal à 0, 1, 2, 3..., et en ce que, pour une dureté globale croissante de l'eau à traiter, on sélectionne des multiples 2ⁿ . X plus petits.

20. Utilisation d'un dispositif suivant l'une des revendications 1 à 17 dans une installation d'adoucissement, de désacidification, de déferrisation ou de démanganisation.
